(19) **Europäisches Patentamt**
**European Patent Office**
**Office européen des brevets**

(11) **EP 3 153 722 A1**

(12) **EUROPEAN PATENT APPLICATION**

(43) Date of publication:
**12.04.2017 Bulletin 2017/15**

(21) Application number: **15188803.9**

(22) Date of filing: **07.10.2015**

(51) Int Cl.:
*F16B 21/18* (2006.01)  *B25B 27/20* (2006.01)
*H01H 3/30* (2006.01)  *H01H 3/42* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **General Electric Technology GmbH
5400 Baden (CH)**

(72) Inventor: **VON ALLMEN, Peter
5054 Kirchleerau (CH)**

(74) Representative: **Brevalex
95, rue d'Amsterdam
75378 Paris Cedex 8 (FR)**

(54) **ASSEMBLY FOR CIRCUIT BREAKER SUCH AS AN ACTUATING-LEVER ASSEMBLY, AND
FABRICATION METHOD OF SUCH AN ASSEMBLY**

(57)    The invention relates to an assembly for a circuit breaker, such as an actuating lever assembly. The assembly (10) comprises a longitudinal axle (120) comprising on a portion (121) a circumferential groove (122); a circuit breaker mechanical component comprising a through hole (111) in which the portion (121) of the longitudinal axle (120) is hosted; and a retaining ring (130) placed on the longitudinal axle (120) engaged with the circumferential groove (122). The through hole (111) comprises an inner groove (112), in such a way that the retaining ring (130) is hosting the through hole (111) engaged with the inner groove (112). The invention also relates to a circuit breaker comprising such an assembly (10) and to a fabrication method for assembling such an assembly (10).

FIG. 1

## Description

## TECHNICAL DOMAIN

The invention relates to the domain of the circuit breaker and relates more precisely to the circuit breaker mechanism used for the actuation of the circuit breaker.

## PREVIOUS ART

A circuit breaker actuation mechanism, such as a spring actuation mechanism, usually comprises mechanical actuating component, such as a lever, rotatably mounted by the means of a longitudinal axle. Such mechanical actuating component forms, together with the longitudinal axle by the means of which it is rotatably mounted, an actuating-lever assembly.

In such actuating-lever assembly, the mechanical actuating component comprises a through hole in which a portion of the longitudinal axle is hosted. In this way, with a maintaining means for maintaining the axle integral in translation with the mechanical actuating component, the portion of the longitudinal axle hosted in the through hole, the rotatable mounting of the mechanical actuating component can easily be obtained with a bearing system mounted around the longitudinal axle.

Considering the force of the actuation of the circuit breaker, the maintaining means for maintaining the axle integral in translation with the mechanical actuating component has to be particularly tough.

So, although there are many solutions available to provide the maintaining means, no one seems to be really appropriate. The split-pins tend to break due to high vibration and cannot hold the heavy axial load during the actuation of the circuit breaker.

A retaining ring mounted in a circumferential groove of the longitudinal axle, is indeed able to withstand the heavy axial load during the actuation of the circuit breaker, but it tend to fall off due to high radial acceleration during the actuation. Furthermore, the retaining ring of the punch type have sharp edge so they tend to break when exposed to heavy vibration.

Another solution is to wobble-rivet the ends of the axle in the through hole. But such solution is costly and difficult to carry out as it requires a special riveting-machine. Furthermore, if an axle made of hardened steel is required, its ends must remain unhardened to enable wobble-riveting. This in turn makes the longitudinal axle more expensive.

## PRESENTATION OF THE INVENTION

The object of the invention is to provide an assembly for a circuit breaker, such as an actuating-lever assembly, the assembly comprising a maintaining means that does not present the above drawbacks.

The invention relates to an assembly for a circuit breaker, such as an actuating-lever assembly, the circuit breaker comprising:

- a longitudinal axle comprising a circumferential groove,
- a circuit breaker component , such as an actuating-lever component, comprising a through hole in which a portion of the longitudinal axle is hosted,
- a retaining ring placed on the axle engaged with the circumferential groove for retaining the longitudinal axle relatively to the circuit breaker component,

the through hole comprising an inner groove, , the circumferential groove being on the portion of the longitudinal axle, in such a way that the retaining ring is hosted in the through hole also engaged with the inner groove.

With such assembly, the retaining ring is hosted in both the circumferential groove and the inner groove. So, even with high radial acceleration during the actuation of the circuit breaker, any risk of fall off is avoided. Furthermore, during the heavy vibrations of the circuit breaker, such as the one that occurred during the actuation of the circuit breaker, the retaining ring is preserved from the high deformations by its position in the inner groove. So the retaining ring, even if it is of the punched type, will not tend to break.

Moreover, such assembly does not need expensive adaptation, such as a special riveting-machine, or a special axle which is only hardened partially.

Another advantage of such assembly is that the retaining of the axle relatively to the circuit breaker mechanical component is in both directions with only one retaining ring. In previous art assembly using retaining rings, such maintaining could only be obtained with two retaining rings.

By retaining ring it has to be understood a fastener that holds components or assemblies onto a shaft or in a housing/bore when installed in a groove. Such retaining rings are also named snap ring, spring ring or circlip.

the retaining ring could have an outer and an inner diameter,

and wherein the circumferential groove could have a depth relative to an circumferential surface of the portion of the longitudinal axle , the circumferential groove depth being greater than or equal to half the difference between the outer and inner diameter of the retaining ring.

By outer and inner diameters of the retaining ring, it has to be understood above and in the remaining of this document, the outer and the inner diameter of the retaining ring in absence of any constrain apply on the retaining ring which can lead to an elastic deformation.

With such depth of the circumferential groove, the retaining ring could be entirely taken in the circumferential groove when the longitudinal axle portion is introduced in the through hole. So the step of introduction of the longitudinal axle portion in the through hole can easily be carried out.

The retaining ring has an outer and an inner diameter,

and wherein the through hole defines a hole diameter, the outer diameter of the retaining ring being greater than the hole diameter.

With such an outer diameter of the retaining ring, the retaining ring will remain taken in the circumferential grove.

The retaining ring could have a width,

and the circumferential groove and the inner groove could have both widths which are equal to or greater than the retaining ring width.

With such widths of the circumferential groove and of the inner groove, the retaining ring could be engaging with both grooves without necessarily be deformed along its width.

The retaining ring could have an outer and an inner diameter,

the inner groove could be recessed from the surface of the through hole by a recess depth,

and wherein the recess depth of the inner groove is greater than a quarter of the difference between the outer and the inner diameter.

Such configuration ensure a more permanent mounting of the portion of the longitudinal axle in the through hole, the retaining ring being particularly difficult to pull back from the inner groove.

The retaining ring could have an outer and an inner diameter,

the inner groove could be recessed from the surface of the through hole by a recess depth,

and wherein the recess depth of the inner groove is smaller than a quarter of the difference between the outer and the inner diameter.

With such a configuration, the mounting of the portion of the longitudinal axle in the through hole is a removable mounting.

The retaining ring could have a circular section.

The circuit breaker mechanical component could be a lever of a spring actuation mechanism of a circuit breaker.

The invention is particularly benefit for such a circuit breaker mechanical component.

The invention also relates on a circuit breaker comprising an assembly, the assembly being an assembly of the invention.

Such circuit breaker has the benefits which come from the assembly of the invention.

The invention also relates on a Fabrication method for assembling a assembly of the invention, the fabrication method being characterized by comprising the following steps of:

- furnishing a longitudinal axle comprising an circumferential groove,
- furnishing a circuit breaker component comprising a through hole for taking a portion of the longitudinal axle,
- furnishing a retaining ring,

- placing the retaining ring on the longitudinal axle, the retaining ring engaging with the circumferential groove
- furnishing an installing tool, the installing tool comprising an installing hole with a diameter d of the installing hole equal to or greater than a diameter of the portion of the longitudinal axle,
- introducing at least a part of the portion of the longitudinal axle in the installing hole, the part comprising the circumferential groove in such a way that the retaining ring is also introduced in the installing hole,
- introducing the portion of the longitudinal axle in the through hole, the installing hole being put in the extension of the through hole during this introduction in such a way that the retaining ring slides directly from the installing hole into the through hole during this introduction.

Such method allows to obtain an assembly of the invention.

**BRIEF DESCRIPTION OF THE DRAWINGS**

The present invention will be better understood with the reading of the specification of a furnished embodiment which does not limit the scope of the invention. This specification refers to the annexed drawings in which:

- figure 1 shows a cross sectional view of an actuating-lever assembly of the invention, the actuating-lever assembly comprising a longitudinal axle, a lever which partially hosts the longitudinal axle and a retaining ring,
- figure 2 shows the axle of the actuating-lever assembly of figure 1,
- figure 3 shows a cross sectional view of the lever,
- figure 4 shows a cross sectional view of the retaining ring,
- figure 5 shows an example of method for installing the retaining ring an actuating-lever assembly of the invention,
- figure 6 shows a diagram of an circuit breaker actuated by a spring actuation mechanism comprising an actuating-lever assembly of the invention, the diagram showing in particular the operational diagram of the spring actuation mechanism, the rest of the circuit breaker being schematized.

Same or similar parts in the different drawings use the same numerical reference to make easier the passage from one drawing to another.

**DETAILED PRESENTATION OF PARTICULAR EMBODIMENTS**

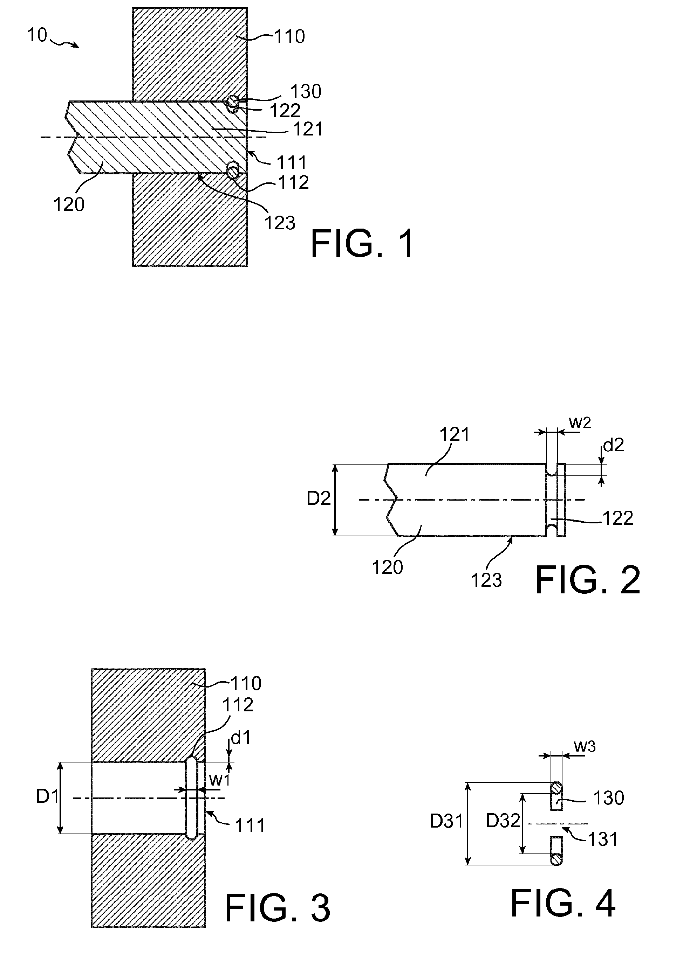

Figure 1 shows an assembly of the invention for a circuit breaker which is an actuating-lever assembly 10. Such actuating-lever assembly 10 is, for example, an assembly which is part of a circuit breaker spring operated actuation mechanism, hereafter "spring mechanism".

The actuating-lever assembly 10 illustrated on figure 1 comprises:

- a longitudinal axle 120 comprising an circumferential groove 122,
- a lever 110 of the spring mechanism comprising a through hole 111 in which a portion 121 of the longitudinal axle 120 is hosting, this portion 121 being a portion of the longitudinal axle 120 comprising the circumferential groove 122, the through hole 111 comprising an inner groove 112,
- a retaining ring 130 placed on the longitudinal axle 120 engaged both with the circumferential groove 122 and the inner groove 112 for retaining the longitudinal axle 120 relatively to the lever 110.

The longitudinal axle 120, as shown on figure 1, has a general longitudinal cylindrical shape. The diameter of the longitudinal axle is D2.

Figure 2 shows the longitudinal axle 120 comprising on its portion 121 hosted in the through hole 111 the circumferential groove 122. The circumferential groove 122 is recessed from the surface 123 of the portion 121 by a depth d2 and has a width w2.

The depth d2 and the width w2 of the circumferential groove 122 are adapted in such a way to entirely take the retaining ring 130 during the introduction of the longitudinal axle 120 portion in the through hole 111.

Figure 3 shows a cross section view of the lever 110. The lever 110 includes the through hole 111 in which the portion 121 of the longitudinal axle 110 is hosted. The through hole 111 is complementary in shape to the portion 121 of the longitudinal axle 110.

The through hole 111 defines a cylindrical cavity and presents a hole diameter D1. The hole diameter D1 is greater than or equal to the axle diameter D2. When the longitudinal axle has to be force fitted, the hole diameter D1 is substantially equal to the axle diameter D2.

The through hole 111 comprises the inner groove 112. The inner groove 112 extends circumferentially along an inner surface of the through hole 111. The inner groove 112 is recessed from the surface of the through hole 111 by a depth d1 and has a width w1.

The lever 110 forms a circuit breaker mechanical component.

As illustrated on figure 1, the retaining ring 130 engages the circumferential groove 122 and the inner groove 112.

The retaining ring 130 in the configuration illustrated on figure 4, is annular shaped with a circular section. To allow an elastic deformation of the retaining ring 130 when assembling the actuating-lever assembly 10, the retaining ring 130 comprises an opening 131.

The retaining ring 130 has an outer and an inner diameter D31, D32. The retaining ring 130 has also a width w3. The width w3 of the retaining ring 130 is preferably smaller than or equal to both widths w2, w1 of the inner and circumferential groove 112, 122.

The retaining ring dimensions are adapted to allow the retaining ring 130 to be entirely taken in the circumferential groove when assembling the actuating-lever assembly 10. This adaptation can be obtained with a difference between the outer and inner diameter D31, D32 of the retaining ring which is smaller than or equal to circumferential groove depth d2. In other words, the outer and inner diameters D31, D32 follow the equation:

$$(1) \quad \frac{D31-D32}{2} \leq d2$$

The dimensions of the retaining ring 130 can also be adapted regarding the type of mounting of the actuating-lever assembly 10.

For an removable mounting of the portion 121 of the longitudinal axle 120 in the through hole 111, the recess depth d1 of the groove in the through hole is smaller than a quarter of the difference between the outer and the inner diameter D31, D32. In other words the outer and inner diameters D31, D32 follow the equation:

$$(2) \quad \frac{D31-D32}{4} > d1$$

For a permanent mounting of the portion 121 of the longitudinal axle 120 in the through hole 111, the recess depth d1 of the inner groove in the through hole is greater than or equal to a quarter of the difference between the outer and the inner diameter D31, D32. In other words the outer and inner diameters D31, D32 follow the equation:

$$(3) \quad \frac{D31-D32}{4} \leq d1$$

Furthermore, in a way to ensure that the retaining ring presents any constrain in the rest position of the actuating-lever assembly, half the difference between the outer diameter D31 and the hole diameter D1 is preferably equal to or greater than the recess depth of inner groove d1. In other words the outer diameter D31 follows the equation:

$$(4) \quad \frac{D31-D1}{2} \geq d1$$

To allow an easy elastic deformation of the retaining ring 130, the retaining ring 130 is preferably made of a material selected in the group comprising the carbon steel, the stainless steel and the beryllium copper.

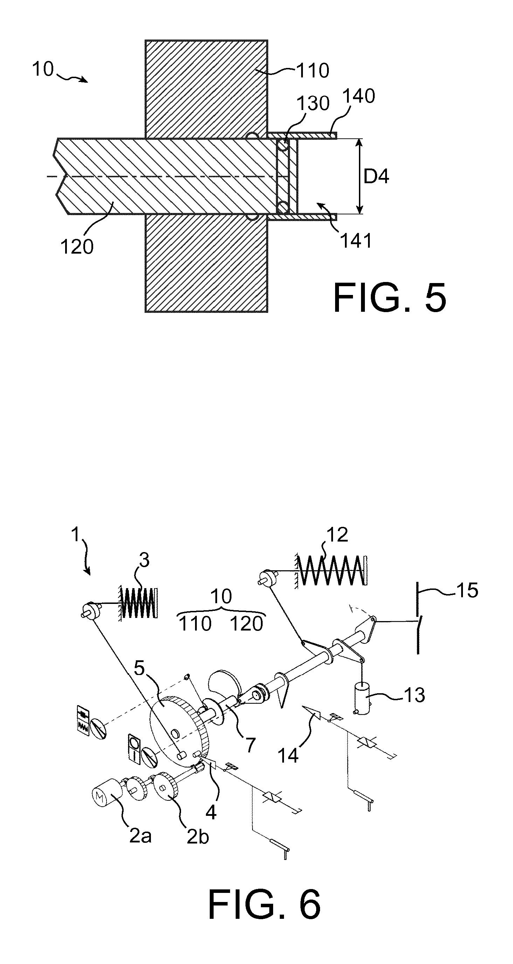

Such an actuating-lever assembly 10 could be obtained by the means of a fabrication method for assembling a actuating-lever assembly which comprises the step shown on figure 5.

This fabrication method comprises the following steps of:

- furnishing the longitudinal axle 120 which comprises the circumferential groove 122,
- furnishing the lever 110, the lever 110 comprising the through hole 111 for fixing the portion 121 of the longitudinal axle 120,
- furnishing the retaining ring 130,
- placing the retaining ring 130 on the longitudinal axle 120, the retaining ring 130 engaging with the circumferential groove 122,
- furnishing an installing tool 140, the installing tool 140 comprising an installing hole 141 with an installing diameter D4 equal to or greater than the axle diameter of the portion 121 of the longitudinal axle 110,
- introducing at least a part of the portion 121 of the longitudinal axle 120 in the installing hole 141, the part comprising the circumferential groove 122 in such a way that the retaining ring 130 is also introduced in the installing hole 141,
- introducing the portion 121 of the longitudinal axle 120 in the through hole 111, the installing hole 141 being put in the extension of the through hole 111 during this introduction in such a way that the retaining ring 130 could slide directly from the installing hole 141 into the through hole 111 during this introduction.

The step of introducing at least a part of the portion 121 of the longitudinal axle 120 in the installing hole 141, may comprise the following substeps:

- applying an elastic deformation on the retaining ring 130 in such a way that the retaining ring 130 is entirely taken in the circumferential groove 122.
- introducing both a part of the portion 121 of the longitudinal axle 120 and the retaining ring 130 in the installing hole 141, the retaining ring 130 being constrained by the inner surface of the installing hole 141.

The installing diameter is chosen such that the retaining ring 130 is not compressed beyond its elastic limit and can easily be introduced in the through hole 111 and locked in place in the inner groove 112.

The installing tool 140 is, in the configuration shown on figure 5, a hollow cylinder whose hole defines the so-called installing hole 141. The installing hole 141 is defined by its so-called installing diameter D4. Of course, the installing tool could be of another shape, as long as it comprises the installing hole 141. For example, the installing tool may be provided with a handle in order to ease its manipulation.

The installing diameter D4 is greater than or equal to the axle diameter D4. The installing hole 141 is also, preferably, similar in diameter to the through hole 111. In an usual configuration, the installing diameter D4 could be equal to the hole diameter D1.

Figure 6 shows a diagram of a circuit breaker 1 which illustrates an example of an operational principle of a spring actuation mechanism comprising an actuating-lever assembly of the invention. This diagram only depicts the spring actuation mechanism, the rest of the circuit breaker being schematized (mainly the switch part 15 of the circuit breaker 1).

The spring actuation mechanism comprises:

- a charging motor 2a and a charging gear 2b, for applying a load on a closing spring 3,
- the closing spring 3 which applies a force to put in rotation a closing gear 4,
- a closing gear 5 which transmits a rotational movement to a closing shaft 7 when it is put in rotation by the closing spring 3,
- a closing latch 4, which locks in rotation the closing gear 5 in such a way to free the force applied by the closing spring 3 on the closing gear when the closing latch 4 is unlocked,
- the closing shaft 7,
- the closing cam 6 which is integral in rotation with the closing shaft 7, the closing cam 6 being configured to engage with a roller-lever 110 when the closing cam 6 is put in rotation by the unlocking of the closing latch 4,
- the roller-lever 110 which is integral in rotation with a main shaft 120, the roller-lever 110 putting in rotation the main shaft 120 when it is engaged with the closing cam 6,
- the main shaft 120,
- an trip latch 14, which locks in rotation the main shaft 120 in an opening rotational direction in such a way to lock in closed position the switch part 15 of the circuit breaker,
- a trip spring which is loaded when the main shaft is put in rotation in an closing rotational direction opposed to the opening rotational direction, and which is configured to apply an force to put in rotation the main shaft in the opening rotational direction when the trip latch is unlocked,
- a trip dashpot to control the opening and the closing kinetic of the switch part.

The main shaft 120 is configured to engage with the switch part 15 in such a way to open the switch part 15 when it is rotating in the opening rotational direction and to close the switch part 15 when it is rotating in the closing rotational direction.

In this spring actuation mechanism, the main-shaft 120 forms a longitudinal axle of the invention and the roller-lever 110 a mechanical actuating component. So the main-shaft 120 and the roller-lever 110 form together an assembly 10 of the invention.

In the above embodiment of the invention, the retaining of the longitudinal axle 120 relatively to the lever is obtained only by means of one retaining ring. Of course, this does not exclude the possibility to use in addition other retaining means or retaining rings according to the invention or to the previous art. So it is possible, without departing from the invention, that an assembly of the invention comprises two retaining rings, each from the invention or only one from the invention, the second one being similar to the one of the previous art.

Similarly, the retaining ring of the above described embodiment is annular in shape and the longitudinal axle has a circular cross section. Nevertheless, the longitudinal axle could have another shape without departing from the invention. For example, the invention could be easily implemented on a longitudinal axle with an oval cross section, the retaining ring being also ovalshaped.

Furthermore, if the invention is, as described above, particularly adapted to be implemented on a spring actuation mechanism of a circuit breaker, the circuit breaker mechanical component being a lever of the spring actuation mechanism, the invention could also be implemented on another part of a circuit breaker as long as this other part comprises a circuit breaker mechanical component having a through hole in which a portion of a longitudinal axle has to be retained.

In the same way, the longitudinal axle and the through hole, in the above described embodiment, have a constant diameter. It is of course perfectly conceivable, without departing from the invention, to provide a longitudinal axle with a diameter which is variable along the longitudinal direction of the axle, the through hole comprising also a variable diameter to be compatible in shape with the portion of the longitudinal axle.

With such a configuration the axle and the inner diameters are, respectively, the diameter of the longitudinal axle at the vicinity of the circumferential groove and of the through hole in the vicinity of the inner groove. By "diameter at the vicinity of", it has to be understood, if we take the example of the circumferential groove, the mean diameter of the longitudinal portion measured on two sections of the longitudinal axle which are respectively longitudinally directly inward and forward to the circumferential groove.

Finally, if the retaining ring is annular with a circular cross section, the retaining ring could easily have another cross section without departing from the invention. For example, a retaining ring may have a rectangular cross section or a tapered section.

## Claims

1. An assembly for a circuit breaker, such as an actuating-lever assembly (10), the assembly (10) comprising :

   - a longitudinal axle (120) comprising an circumferential groove (122),
   - a circuit breaker mechanical component, such as a mechanical actuating component, comprising a through hole (111) in which a portion (121) of the longitudinal axle (120) is hosted,
   - a retaining ring (130) placed on the longitudinal axle (120) engaged with the circumferential groove (122) for retaining the longitudinal axle (120) relatively to the circuit breaker component ,

   the assembly (10) **being characterized in that** the through hole (111) comprises an inner groove (112), the circumferential groove (122) being on the portion (121) of the longitudinal axle (120), in such a way that the retaining ring (130) is hosted in the through hole (111) also engaged with the inner groove (112).

2. The assembly (10) of claim 1, wherein the retaining ring (130) has an outer and an inner diameter (D31, D32),
   and wherein the circumferential groove (122) has a depth (d2) relative to an circumferential surface (123) of the portion (121) of the longitudinal axle (120), the circumferential groove depth (d2) being greater than or equal to half the difference between the outer and inner diameter (D31, D32) of the retaining ring (130).

3. The assembly (10) of claim 1 or claim 2, wherein the retaining ring (130) has an outer and an inner diameter (D31, D32),
   and wherein the through hole (111) defines a hole diameter (D1), the outer diameter (D31) of the retaining ring (130) being greater than the hole diameter (D1).

4. The assembly (10) of any one from claim 1 to claim 3, wherein the retaining ring (130) has an width (w3), and wherein the circumferential groove (122) and the inner groove (112) have both width (w2,w1) which are equal to or greater than the retaining ring width (w3).

5. The assembly (10) of any one from claim 1 to claim 4, wherein the retaining ring (130) has an outer and an inner diameter(D31, D32),
   wherein the inner groove (112) is recessed from the surface of the through hole (111) by a recess depth (d1),
   and wherein the recess depth (d1) of the inner groove (112) is greater than or equal to a quarter of the difference between the outer and the inner diameter (D31, D32).

6. The assembly (10) of any one from claim 1 to claim 4, wherein the retaining ring (130) has an outer and an inner diameter (D31, D32),
wherein the inner groove (112) is recessed from the surface of the through hole (111) by a recess depth (d1),
and wherein the recess depth (d1) of the inner groove (112) is smaller than a quarter of the difference between the outer and the inner diameter (D31, D32).

7. The assembly (10) of any one from claim 1 to claim 6, wherein the retaining ring (130) has a circular section.

8. The assembly (10) of any one from claim 1 to 8, wherein the circuit breaker mechanical component is a lever (110) of a spring actuation mechanism of a circuit breaker.

9. Circuit breaker comprising an assembly (10), the circuit breaker being **characterized in that** the assembly (10) is an assembly of any one from claim 1 to claim 8.

10. Fabrication method for assembling a assembly (10) of any one from claim 1 to 9, the fabrication method being **characterized by** comprising the following steps of:

   - furnishing a longitudinal axle (120) comprising an circumferential groove (122),
   - furnishing a circuit breaker component comprising a through hole (111) for taking a portion of the longitudinal axle(120),
   - furnishing a retaining ring (130),
   - placing the retaining ring (130) on the longitudinal axle (120), the retaining ring (120) engaging with the circumferential groove (122)
   - furnishing an installing tool (140), the installing tool (140) comprising an installing hole (141) with a diameter d of the installing hole (141) equal to or greater than a diameter of the portion (121) of the longitudinal axle (120),
   - introducing at least a part of the portion (121) of the longitudinal axle (120) in the installing hole (141), the part comprising the circumferential groove (122) in such a way that the retaining ring (130) is also introduced in the installing hole (141),
   - introducing the portion (121) of the longitudinal axle (120) in the through hole (111), the installing hole (141) being put in the extension of the through hole (111) during this introduction in such a way that the retaining ring (130) slides directly from the installing hole (141) into the through hole (111) during this introduction.

10

110

130
122
121
111
112

120
123

**FIG. 1**

121
w2
d2
D2
122
120
123

**FIG. 2**

110
112
d1
D1
w1
111

**FIG. 3**

w3
D31
D32
130
131

**FIG. 4**

10

110

130  140

D4

120

141

# FIG. 5

1

12

3

10
110   120

15

5

13

7

14

2a   2b

4

# FIG. 6

Europäisches
Patentamt

European
Patent Office

Office européen
des brevets

## EUROPEAN SEARCH REPORT

Application Number

EP 15 18 8803

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GB 407 205 A (GEN ELECTRIC) 15 March 1934 (1934-03-15) * page 1, line 53 - line 68; figures 1,2 * ----- | 1-10 | INV. F16B21/18 B25B27/20 H01H3/30 H01H3/42 |
| Y | DE 10 2012 013243 A1 (AUDI AG [DE]) 9 January 2014 (2014-01-09) * paragraph [0002] - paragraph [0003] * * paragraph [0033] - paragraph [0037]; figures 1,2 * ----- | 1-10 | |
| Y | US 5 541 378 A (NIKLAUS ROLF [CH]) 30 July 1996 (1996-07-30) * column 3, line 54 - column 4, line 9; figures 1, 3 * * column 5, line 50 - line 64 * ----- | 1-10 | |
| Y | US 2005/132552 A1 (GREENHILL MICHAEL [US]) 23 June 2005 (2005-06-23) * paragraph [0038] - paragraph [0039]; figure 1 * ----- | 10 | |
| | | | TECHNICAL FIELDS SEARCHED (IPC) F16B H01H B25B |

The present search report has been drawn up for all claims

| Place of search | Date of completion of the search | Examiner |
|---|---|---|
| Munich | 21 January 2016 | Dobbs, Harvey |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 18 8803

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2016

| Patent document cited in search report | | Publication date | Patent family member(s) | | Publication date |
|---|---|---|---|---|---|
| GB 407205 | A | 15-03-1934 | NONE | | |
| DE 102012013243 | A1 | 09-01-2014 | NONE | | |
| US 5541378 | A | 30-07-1996 | AT | 144646 T | 15-11-1996 |
| | | | DE | 59304319 D1 | 28-11-1996 |
| | | | EP | 0658909 A1 | 21-06-1995 |
| | | | JP | H07201247 A | 04-08-1995 |
| | | | US | 5541378 A | 30-07-1996 |
| US 2005132552 | A1 | 23-06-2005 | NONE | | |

EPO FORM P0459

For more details about this annex : see Official Journal of the European Patent Office, No. 12/82